# FASCICULE DE BREVET EUROPEEN

(11) **EP 2 551 561 B1**
(45) Date de publication et mention de la délivrance du brevet: **03.06.2015**
(21) Numéro de dépôt: 12178347.6
(22) Date de dépôt: 27.07.2012
(51) Int. Cl.: F16J 15/02, F16J 15/52

(54) **Joint de connexion entre deux structures mobiles entre elles**
Verbindungsfuge zwischen zwei Strukturen, die sich gegeneinander bewegen
Connection joint between two mutually movable structures

(30) Priorité: 29.07.2011 FR 1156980
(43) Date de publication de la demande: 30.01.2013
(73) Titulaire: JPR, 75008 Paris (FR)
(72) Inventeur: Torris, Antoine, 80800 VILLERS BRETONNEUX (FR)
(74) Mandataire: Reboussin, Yohann Mickaël Noël

(56) Documents cités:
- EP-A2- 0 369 799
- US-A1- 2011 266 392

## Description

L'invention concerne un joint de connexion entre deux structures mobiles entre elles.

De préférence, les structures mobiles sont tubulaires. Il peut s'agir, par exemple, de deux ouvertures ou portes de compartiments destinées au passage d'utilisateurs.

A l'heure actuelle, les compartiments destinés au repos de l'équipage sont directement fixés sur la structure sans aucun degré de liberté. Ces compartiments sont peu confortables car ils subissent directement tous les mouvements et toutes les vibrations de l'avion. Outre ces mouvements incessants, ces compartiments sont également bruyants, puisque les bruits sont transmis par la structure de l'avion aux compartiments.

Une nouvelle génération d'avion présente des compartiments de repos équipages qui sont suspendus à la structure, au lieu d'être fixés sur la structure.

Le fait de suspendre ces compartiments apporte un confort supplémentaire aux membres d'équipage, mais implique les difficultés suivantes :
- Jeu entre les compartiments importants
- Déplacements entre les compartiments importants
- Nécessité d'une bonne absorption acoustique pour le confort sonore
- éviter les risques de pincement d'une main ou autre entre deux compartiments afin de supprimer.
- Montage et démontage aisés.

Le document EP 0 369 799 décrit un joint en matériau déformable élastiquement comprenant, en coupe transversale, une structure tubulaire présentant une première paroi reliée à une deuxième paroi présentant une structure en soufflet de part et d'autre de laquelle sont disposées deux parties de fixation avec d'une part, une portière et d'autre part une vitre.

La conception de ce joint n'est cependant pas adaptée aux applications visées par la présente invention.

Une nouvelle étanchéité entre les compartiments doit alors être conçue pour accepter ces nouveaux déplacements.A cette fin, l'invention à pour objet un joint en matériau déformable élastiquement selon la revendication 1.

Selon d'autres modes de réalisation :
- le joint peut être annulaire ou linéaire ;
- les parties de fixation peuvent être des profilés de fixation destinés à être glissés dans des profilés de forme complémentaire portés par les structures mobiles ;
- les profilés de fixation peuvent être plus rigides que le reste du joint ;
- les profilés de fixation du joint peuvent être munis d'un revêtement à faible coefficient de frottement ;
- le revêtement à faible coefficient de frottement peut être choisi parmi un revêtement téflon et un tissu polyester à faible coefficient de frottement ;
- le revêtement à faible coefficient de frottement peut être porté par ou constitutif d'un profilé inséré autour de chaque profilé de fixation du joint ;
- chaque liaison peut comprendre deux plis courbés de manière opposée ; et/ou
- le joint peut comprendre, en outre, des renforts choisis parmi du tissu de polyester, du tissu d'aramide, du tissu de verre ou un assemblage de ceux ci.

Le joint selon l'invention peut être applicable à toutes jonctions de deux structures mobiles entre elles. Par exemple, ces structures peuvent être des compartiments disposés dans des avions, des trains, des bateaux, ou dans tout autre véhicule subissant des vibrations et dans lequel le confort des passagers peut être amélioré par la suspension de compartiments à la structure du véhicule.

D'autres caractéristiques de l'invention ressortiront de la description détaillée ci-après faite en référence aux dessins annexés qui représentent, respectivement :
- la figure 1, une vue schématique en perspective, d'un joint selon l'invention en position d'utilisation entre deux compartiments mobiles entre eux ;
- la figure 2, une vue schématique en coupe d'un exemple de réalisation d'un joint selon l'invention ; et
- la figure 3, une vue schématique en coupe du joint de la figure 2 muni localement d'un revêtement à faible coefficient de frottement.

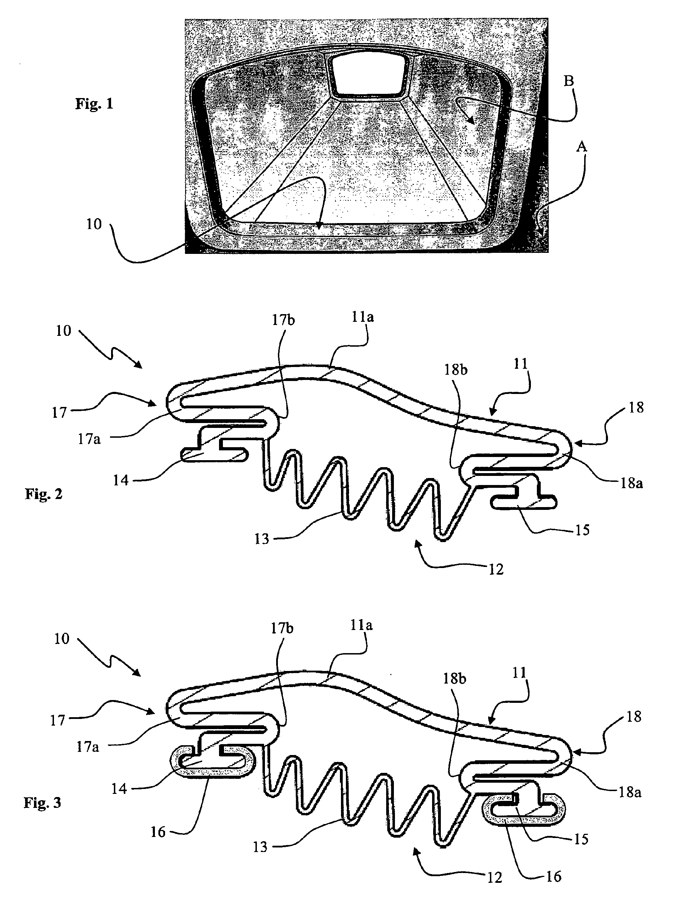

La figure 1 représente un joint 10 selon l'invention, fixé entre deux structures A et B mobiles l'une par rapport à l'autre, telles que des compartiments suspendus dans un avion. Chaque compartiment A et B présente, en position d'utilisation, une partie interne dans laquelle des utilisateurs sont destinés à circuler, et une partie externe tournée vers la structure de l'avion ou du support des compartiments.

Le joint est en matériau déformable élastiquement, tel qu'un élastomère. Le matériau est avantageusement choisi dans le groupe constitué par du silicone, de l'EPDM (éthylène-propylène-diène monomère) si les structures mobiles sont situées dans une zone où de l'huile peut se trouver, un élastomère à base de chloroprène, un élastomère à base de nitrile, un élastomère à base de fluorosilicone si les structures mobiles sont situées dans une zone où de l'essence peut se trouver.

Comme illustré aux figures 2 et 3, le joint 10 comprend, en coupe transversale, une structure tubulaire présentant une paroi intérieure 11, destinée à être disposée vers la partie interne des structures mobiles, reliée à une paroi extérieure 12 destinée à être disposée vers la partie externe des structures mobiles A et B.

Conformément à l'invention, la paroi intérieure 11 est plane.

On entend par « plane » le fait que la paroi intérieure est dépourvue de toute concavité ou convexité pouvant constituer une pince ou un obstacle éventuellement blessant pour une partie du corps d'un utilisateur. « Plane » ne signifie pas nécessairement « plate ». Au contraire, comme le montre les figures 2 et 3 la paroi intérieure 11 peut présenter une forme générale munie de larges courbures 11a pour éviter tout pli saillant, par exemple à la jonction de la paroi intérieure et de la paroi extérieure. Les courbures 11 a permettent d'absorber au moins une partie des déplacements entre les structures mobiles.

De préférence, il faut également que la paroi intérieure présente une raideur suffisante pour éviter qu'une personne ne puisse enfoncer une partie de son corps (doigt, pied ou genou par exemple) entre les deux structures mobiles.

La raideur de la paroi intérieure, comme des autres parties du joint selon l'invention, peut être adaptée en modulant l'épaisseur de la paroi intérieure, la dureté du matériau élastomère, en adaptant le matériau élastomère lui-même (par exemple en utilisant un silicone de 20 Shore ou un silicone de 80 Shore), en ajoutant un ou plusieurs renforts, tel que du tissu de polyester, du tissu d'aramide ou du tissu de verre.

La paroi intérieure 11 évite ainsi aux utilisateurs (membres d'équipage par exemple) de se blesser lors du passage entre les deux compartiments A et B.

La paroi extérieure 12 présente, quant à elle, une structure en soufflet 13 de part et d'autre de laquelle sont disposés deux parties de fixation 14 et 15 destinés à permettre la fixation du joint 11 sur chacune des structures mobiles A et B.

La paroi extérieure 12 permet d'atténuer les bruits et assure, ainsi, un rôle d'isolation acoustique en créant avec la paroi intérieure un caisson fermé. La structure en soufflet 13 permet non seulement d'atténuer les bruits, mais également une déformation optimale du joint lors d'un déplacement entre les deux structures mobiles A et B, sans risque que le joint 10 ne se détache des structures mobiles A et B.

Avantageusement, le joint 10 est annulaire, c'est-à-dire refermé sur lui-même. Son périmètre annulaire est donc prédéterminé en fonction des dimensions des structures à relier.

Alternativement, le joint peut être linéaire pour s'adapter à des structures de toutes dimensions et de toutes formes.

Avantageusement, les parties de fixation sont des profilés de fixation 14 et 15 destinés à être glissés dans des profilés de forme complémentaire portés par les structures mobiles (non représentés). Ceci permet un montage et un démontage facile du joint.

De préférence, les profilés de fixation 14 et 15 ont une forme générale en coupe en forme de T, la barre verticale du T étant reliée à la paroi extérieure, et la barre horizontale du T étant destinée à entrer en contact avec le profilé complémentaire porté par chaque structure mobile. Cette forme permet non seulement un montage/démontage facile, mais réduit également les risques de sortie du profilé de fixation hors des profilés des structures.

Lorsque le joint 10 est annulaire, les profilés de fixation, de préférence en T, sont insérés en force dans les profilés complémentaires des structures mobiles. Lorsque le joint est linéaire, il présente l'avantage de permettre un montage par coulissement des profilés de fixation dans les profilés complémentaires des structures mobiles. Sa fabrication est également plus facile car il peut être réalisé par extrusion.

De préférence, les profilés 14 et 15 sont plus rigides que le reste du joint, ce qui permet d'obtenir un meilleur maintien dans les profilés complémentaires des structures mobiles. Autrement dit, les profilés présentent moins de risque de se déboiter sous l'effet des mouvements et/ou vibrations des structures mobiles. Dans ce cas, un joint linéaire est préféré pour permettre un positionnement par coulissement.

Lorsque les profilés sont plus rigides que le reste du joint, on prévoit avantageusement de munir les profilés du joint d'un revêtement 16 à faible coefficient de frottement, de préférence autour de 0,3. Un tel coefficient de frottement est mesuré selon la norme AITM 1-0044.

Selon cette norme, le coefficient de frottement est défini de la manière suivante : il s'agit du ratio entre la charge de frottement par glissement sur un panneau de référence d'une masse de référence recouverte du matériau à tester par rapport à la charge de frottement par glissement sur le panneau de référence de la masse de référence seule.

Le panneau de référence mesure 500 mm de long par 150 mm de large par 1,5 mm d'épaisseur. Il est en alliage d'aluminium selon la norme NF EN 2090.

Le bloc de référence a une masse de 5 kg et présente une surface de glissement de 100 mm par 50 mm.

La machine de mesure de tension doit être calibrée, avoir une précision de 1% et permettre une vitesse de traction de 500 mm par minute. Un exemple de machine convenant à la mesure est une machine de marque INSTRON, de modèle 1122.

Selon cette norme, le coefficient de frottement est mesuré de la manière suivante :
- Fixer le panneau de référence perpendiculairement à la direction de traction de la machine de mesure ;
- Relier le bloc de référence à la machine de mesure de tension par l'intermédiaire d'un câble en prise avec une poulie de renvoi de 130 mm de diamètre, de sorte que l'angle de renvoi entre le bloc de référence et l'appareil de mesure de traction soit de 90°.
- Mesurer la traction nécessaire pour déplacer le bloc de référence sur toute la longueur du panneau de référence à une vitesse de 500 mm par minute. Pour cela, enregistrer la traction comme fonction du déplacement le long du panneau de référence en divisant le déplacement le long du panneau de référence en quinze sections et enregistrer les valeurs de traction pour chaque section ;
- Appliquer une couche de matériau à faible coefficient de frottement sous le bloc de référence de sorte que l'épaisseur ne dépasse pas 125 µm ;
- Mesurer et enregistrer la traction nécessaire pour déplacer le bloc de référence ainsi recouvert sur toute la longueur du panneau de référence à une vitesse de 500 mm par minute. Pour cela, enregistrer la traction comme fonction du déplacement le long du panneau de référence en divisant le déplacement le long du panneau de référence en quinze sections et enregistrer les valeurs de traction pour chaque section ;
- Recommencer toutes les mesures trois fois ;
- Calculer la valeur moyenne de traction en excluant la valeur de la première et de la dernière section de déplacement. Cette valeur moyenne est la charge de frottement par glissement ;
- Effectuer le rapport entre la charge de frottement par glissement sur un panneau de référence d'une masse de référence recouverte du matériau à tester par rapport à la charge de frottement par glissement sur le panneau de référence de la masse de référence seule.

Un revêtement à faible coefficient de frottement peut être choisi parmi un revêtement teflon ou un tissu polyester à faible coefficient de frottement.

Ceci assure un montage plus facile du joint sur les structures mobiles. Alternativement ou en combinaison, du revêtement à faible coefficient de frottement est disposé dans les profilés complémentaires portés par les structures mobiles.

Dans un mode de réalisation alternatif, le revêtement 16 à faible coefficient de frottement peut être porté par ou constitutif d'un profilé inséré autour de chaque profilé de fixation du joint, l'ensemble étant ensuite inséré dans les profilés complémentaires des structures mobiles.

Les liaisons 17 et 18 entre la paroi intérieure 11 et la paroi extérieure 12 sont constituées par des plis courbés dont la longueur et la courbure sont choisis en fonction du déplacement maximal autorisé entre les structures mobiles.

Avantageusement, chaque liaison 17 et 18 comporte deux plis 17a-17b, 18a-18b courbés de manière opposée. Le premier pli 17a-18a étant dans le prolongement de la paroi intérieure, sa courbure est dirigée vers la paroi extérieure 12. Le second pli 17b-18b présente alors une courbure dirigée à l'opposée de la paroi extérieure 12. Comme illustré aux figures 2 et 3, la partie en soufflet 13 est solidaire de chacun des seconds plis 17b-18b qui portent également chacun une partie de fixation 14-15.

Cette structure, grâce à la combinaison des larges courbures 11a de la paroi intérieure 11 avec les plis 17-17a, 18-18a et la structure en soufflet 13, a pour avantage de présenter une grande capacité d'absorption des mouvements relatifs entre les structures mobiles et d'atténuation du bruit.

## Revendications

1. Joint (10) en matériau déformable élastiquement comprenant, en coupe transversale, une structure tubulaire présentant :
• une paroi dite intérieure (11),
• une paroi dite extérieure (12) présentant une structure en soufflet (13) de part et d'autre de laquelle sont disposés deux parties de fixation (14-15) du joint,
**caractérisé en ce que** le joint (10) comprend des liaisons (17-18) constituées par des plis courbés (17a-17b, 18a-18b) pour relier la paroi intérieure (11), plane, et la paroi extérieure (12).

2. Joint selon la revendication 1, dans lequel le joint est annulaire.

3. Joint selon la revendication 1, dans lequel le joint est linéaire.

4. Joint selon l'une quelconque des revendications 1 à 3, dans lequel les parties de fixation (14, 15) du joint sont des profilés de fixation.

5. Joint selon la revendication 4, dans lequel les profilés de fixation (14, 15) sont plus rigides que le reste du joint.

6. Joint selon la revendication 5, dans lequel les profilés de fixation (14, 15) du joint sont munis d'un revêtement (16) à faible coefficient de frottement.

7. Joint selon la revendication 6, dans lequel le revêtement (16) à faible coefficient de frottement est choisi parmi un revêtement téflon et un tissu polyester à faible coefficient de frottement.

8. Joint selon l'une quelconque des revendications 6 ou 7, dans lequel le revêtement (16) à faible coefficient de frottement est porté par ou constitutif d'un profilé inséré autour de chaque profilé de fixation (14, 15) du joint.

9. Joint selon l'une des revendications 1 à 8, dans lequel chaque liaison (17-18) comprend deux plis courbés (17a-17b, 18a-18b) de manière opposée.

10. Joint selon l'une quelconque des revendications 1 à 9, comprenant, en outre, des renforts choisis parmi du tissu de polyester, du tissu d'aramide, du tissu de verre ou un assemblage de ceux ci.

## Patentansprüche

1. Dichtung (10) aus einem elastisch verformbaren Material, umfassend im Querschnitt eine röhrenförmige Struktur, welche aufweist:
• eine intern genannte Wand (11),
• eine extern genannte Wand (12), welche eine balgartige Struktur (13) aufweist, an deren beiden Seiten zwei Befestigungsabschnitte (14-15) der Dichtung angeordnet sind,
**dadurch gekennzeichnet, dass** die Dichtung (10) Verbindungen (17-18) umfasst, welche durch gekrümmte Falten (17a-17b, 18a-18b) gebildet sind, um die ebene interne Wand (11) und die externe Wand (12) zu verbinden.

2. Dichtung nach Anspruch 1, wobei die Dichtung ringförmig ist.

3. Dichtung nach Anspruch 1, wobei die Dichtung linear ist.

4. Dichtung nach einem der Ansprüche 1 bis 3, wobei die Befestigungsabschnitte (14, 15) der Dichtung Befestigungsprofile sind.

5. Dichtung nach Anspruch 4, wobei die Befestigungsprofile (14, 15) starrer als der Rest der Dichtung sind.

6. Dichtung nach Anspruch 5, wobei die Befestigungsprofile (14, 15) der Dichtung mit einer Beschichtung (16) mit geringem Reibungskoeffizienten versehen sind.

7. Dichtung nach Anspruch 6, wobei die Beschichtung (16) mit geringem Reibungskoeffizient ausgewählt ist aus einer Teflonbeschichtung und einem Polyestergewebe mit geringem Reibungskoeffizienten.

8. Dichtung nach einem der Ansprüche 6 oder 7, wobei die Beschichtung (16) mit geringem Reibungskoeffizienten getragen oder Bestandteil ist von einem Profil, welches um jedes Befestigungsprofil (14, 15) herum eingesetzt ist.

9. Dichtung nach einem der Ansprüche 1 bis 8, wobei jede Verbindung (17-18) zwei auf entgegen gesetzte Weise gekrümmte Falten (17a-17b, 18a-18b) umfasst.

10. Dichtung nach einem der Ansprüche 1 bis 9, umfassend außerdem Verstärkungen, welche ausgewählt sind aus Polyestergewebe, Aramidgewebe, Glasgewebe oder einem Verbund derselben.

## Claims

1. Seal (10) made from elastically deformable material comprising a tubular structure in cross-section having:
• an internal wall (11),
• an external wall (12) incorporating a bellows structure (13), on either side of which two parts (14-15) for securing the seal are disposed,
**characterised in that** the seal (10) comprises links (17-18) formed by curved folds (17a-17b, 18a-18b) connecting the planar internal wall (11) and the external wall (12).

2. Seal as claimed in claim 1, wherein the seal is annular.

3. Seal as claimed in claim 1, wherein the seal is linear.

4. Seal as claimed in any one of claims 1 to 3, wherein the parts (14, 15) for securing the seal are profiled fitting sections.

5. Seal as claimed in claim 4, wherein the profiled fitting sections (14, 15) are more rigid than the rest of the seal.

6. Seal as claimed in claim 5, wherein the profiled fitting sections (14, 15) of the seal are provided with a facing (16) having a low coefficient of friction.

7. Seal as claimed in claim 6, wherein the facing (16) having a low coefficient of friction is selected from a Teflon facing and a polyester fabric having a low coefficient of friction.

8. Seal as claimed in any one of claims 6 or 7, wherein the facing (16) having a low coefficient of friction is supported by or part of a section fitted around each profiled fitting section (14, 15) of the seal.

9. Seal as claimed in one of claims 1 to 8, wherein each link (17-18) comprises two oppositely curved folds (17a-17b, 18a-18b).

10. Seal as claimed in any one of claims 1 to 9, further comprising reinforcements selected from polyester fabric, aramid fabric, glass fabric or an assembly of the latter.
